# EUROPEAN PATENT APPLICATION

(11) **EP 0 888 952 A1**
(43) Date of publication of application: **07.01.1999**
(21) Application number: 97250282.7
(22) Date of filing: 18.09.1997
(51) Int. Cl.: B62D 21/15, B60J 5/04

(54) **Impact energy absorber**

(30) Priority: 01.07.1997 JP 175546/97
(71) Applicant: Ohtsuka Co., Ltd., Shinagawa-ku Tokyo (JP)
(72) Inventor: Otsuka, Kunio, c/o Ohtsuka Co., Ltd., Shinagawa-ku, Tokyo (JP)
(74) Representative: Meissner, Peter E., Dipl.-Ing.

(57) **Abstract**

An object of the present invention is to efficiently absorb the energy of an external force applied to a vehicle body without an appreciable increase in weight of an automobile. The impact energy absorber is a metal pipe whose cross section is circular, and provided with concaves and convexes on both of the front and back surfaces in a spiral form or bellows form. This energy absorber is bonded to the room-side surface of an outer panel of the vehicle body or the inner panel using an adhesive or the like. When an external force is applied to the energy absorber through the panel face of the vehicle body, the energy absorber can absorb the energy of the external force by being deformed plastically. At this time, when occupants are hit against the panel and the like and indirectly against the energy absorber, the energy absorber can absorb the kinetic energy of occupants by being deformed plastically.

## Description

### FIELD OF THE INVENTION AND RELATED ART STATEMENT

The present invention relates to an impact energy absorber for absorbing the energy of an external force applied to an automotive body, and an impact energy absorber as a protection for occupants against impact in the vehicle.

To ensure the safety of an automobile, a body panel such as an outer panel and inner panel has so far been reinforced. To reinforce the body panel, the thickness of panel is increased. When the thickness of panel is increased, however, the weight of a vehicle body increases accordingly. As a result, the manufacturing cost as well as the material cost increases, and the fuel consumption becomes high when the automobile is run. Therefore, in designing the body panel, consideration is made to fully increase the strength of panel by considering the curvature, thickness and the like of the panel.

### OBJECT AND SUMMARY OF THE INVENTION

Sometimes, however, it is difficult to make design because the automotive body requires a different shape and thickness according to the vehicle type, or the body cannot be reinforced by an inner panel because automotive accessories are disposed. Therefore, even if attempt is made to strengthen the body while achieving the lightening of the same, it is difficult to strengthen all portions, and some reinforcement member is required. Also, there is a case where it is desired to further strengthen the body by a simple method while suppressing the increase in weight even if the body has been strengthened fully in designing.

On the other hand, when an external force over a certain value is applied to the automotive body, the body panel undergoes plastic deformation. In such a case, if an absorber is provided to absorb the energy of the external force, the impact of occupants of the automobile and the damage to other components due to the external force can be alleviated.

The present invention was made to solve the above problems, and an object thereof is to provide an impact energy absorber which can absorb the energy of an external force applied to a body effectively without an appreciable increase in weight of an automobile.

Furthermore, another object of the present invention is to provide an impact energy absorber for absorbing the kinetic energy of the occupants, when the occupants in the automobile hit on the automotive body (pillar, roof and the like).

To achieve the above object, the present invention provides an impact energy absorber which is a metallic pipe provided with concaves and convexes integrally molded on the front and back surfaces and disposed in a space provided between a body outer panel which forms the external face of an automobile and a body inner panel, with the peripheral face of the pipe being mounted with a mounting member facing said both panel surfaces to absorb the energy of an external force by being deformed plastically when an external force is applied to the pipe.

Thereby, the impact energy absorber absorbs an external force when the external force is applied from outside of the automotive body, and absorbs the kinetic energy of the occupants when the occupants are hit against the inner panel or the like.

### BRIEF DESCRIPTION OF THE DRAWINGS

FIG. 1A is a perspective view of an impact energy absorber in accordance with an embodiment of the present invention, FIG. 1B is a perspective view of an impact energy absorber of FIG. 1 when it is crashed;
FIG. 2A is a front view of the impact energy absorber wherein the concaves and convexes are bellows-shaped, FIG. 2B is a partially cutaway side view of the same, and FIG. 2C is an enlarged view of X portion in FIG. 2B;
FIG. 3A is a front view of the impact energy absorber wherein the concaves and convexes are spiral-shaped, FIG. 3B is a partially cutaway side view of the same, and FIG. 3C is an enlarged view of Y portion in FIG. 3B;
FIG. 4A is a perspective view of the impact energy absorber whose lateral cross section is ellipse, FIG. 4B is a perspective view of the impact energy absorber in which a circular pipe is formed into an elliptic shape afterward;
FIG. 5A is a front view of the impact energy absorber whose lateral cross section is triangle, FIG. 5B is a front view of the impact energy absorber in a quadrangular shape, and FIG. 5C is a front view of the impact energy absorber in a pentagonal shape;
FIG. 6 is a schematic view showing a characteristic test for the impact energy absorber in accordance with the embodiment of the present invention;
FIG. 7 is a schematic graph showing the result of the characteristic test;
FIG. 8 is a perspective view of an automobile showing locations where the impact energy absorbers in accordance with the embodiment of the present invention are arranged;
FIG. 9 is an exploded perspective view of a side body of the automobile; and
FIG. 10 is a sectional view of a front door of the automobile.

### DETAILED DESCRIPTION OF PREFERRED EMBODIMENTS

An impact energy absorber in accordance with an embodiment of the present invention will be described with reference to the drawings.

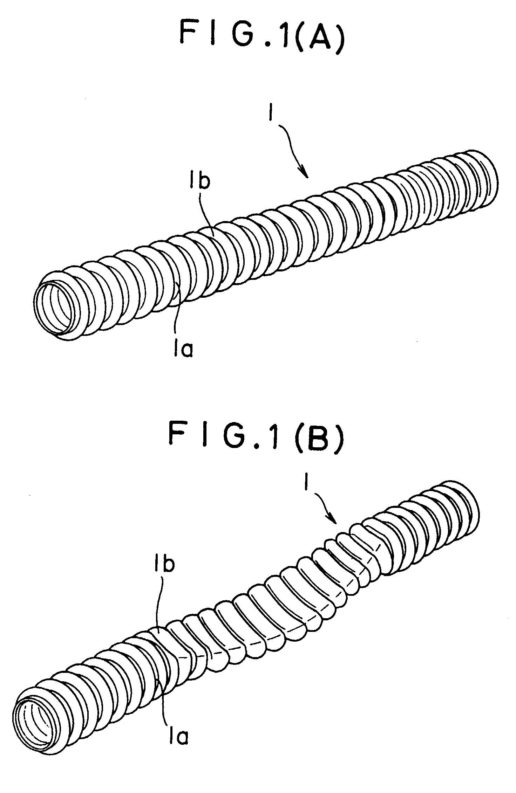

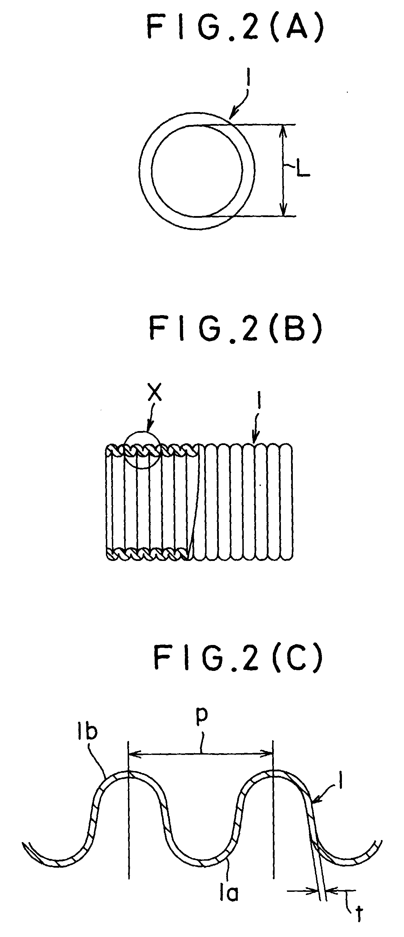

FIGS. 1 and 2 show an impact energy absorber 1 in accordance with the present invention. This energy absorber 1 is mainly used as a reinforcing material for an automotive body and a protection material for occupants. As shown in FIG. 2A, the impact energy absorber 1 is a metallic pipe having a substantially circular lateral (radial) cross section. And as shown in FIGS. 2B and 2C, concaves and convexes 1a and 1b in a wave-form (or in a corrugated form) are integrally formed on both front and back faces.

Furthermore, the impact energy absorber 1 has a thickness t which is a certain thickness as a whole, and the shapes of concaves and convexes 1a and 1b on the both front and back faces are in a bellows shape in which annular concaves 1a and convexes 1b are arranged alternately in the axial direction and in parallel. The shapes of each peak and trough of respective concaves 1a and convexes 1b are all the same, and the corrugated pitch p is the same for each peak. The pipe axis of the impact energy absorber 1 is made flexible by means of concaves 1a and convexes 1b so that it can be bent in a S-shape. As the material of the impact energy absorber 1, various metals such as iron, copper, aluminum and stainless may be used.

The impact energy absorber may have various shapes other than the above-mentioned shapes.

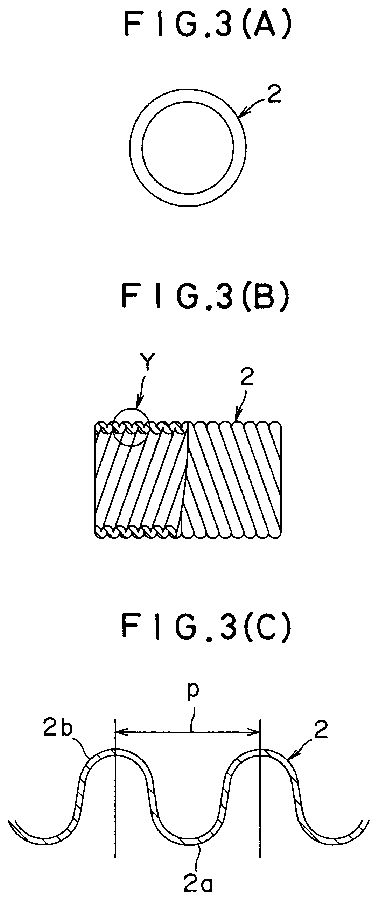

The impact energy absorbers 2 shown in FIG. 3A to 3C are basically the same as the impact energy absorber 1 described above, but are different in that concaves and convexes 2a, 2b on the pipe face extend in the axial direction of the pipe in a spiral form. Other shapes, that is, the height of the peak and the depth of the trough of each concave 2a and convex 2b, and the length of corrugated pitch p are the same as those of the impact energy absorber 1 described above.

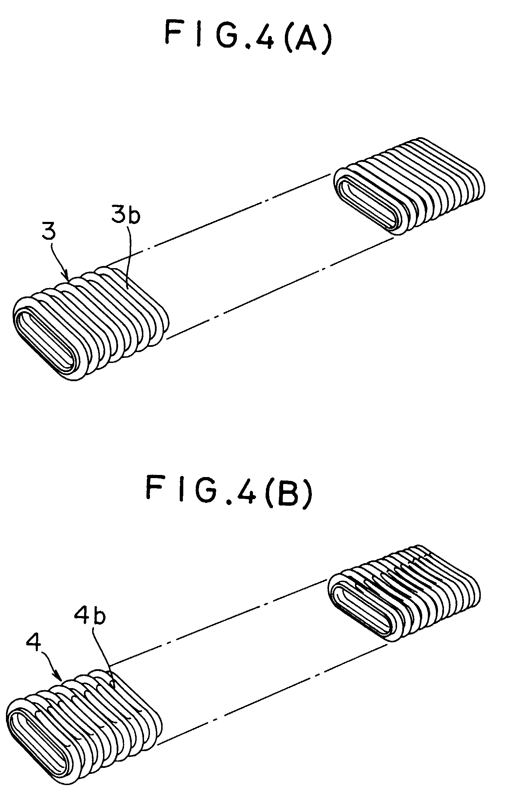

The impact energy absorbers 3 and 4 shown in FIGS. 4A and 4B have a cross section in an elliptic form, and convexes 3b and 4b on the bottom face and the upper face form planes. The impact energy absorber 4 shown in FIG. 4A is formed in an elliptic form from the beginning, and the impact energy absorber 5 shown in FIG. 4B is formed in a circular form at the initial stage, and then it is formed into an elliptic form by pressing vertically, and therefore, convexes 4b are crashed.

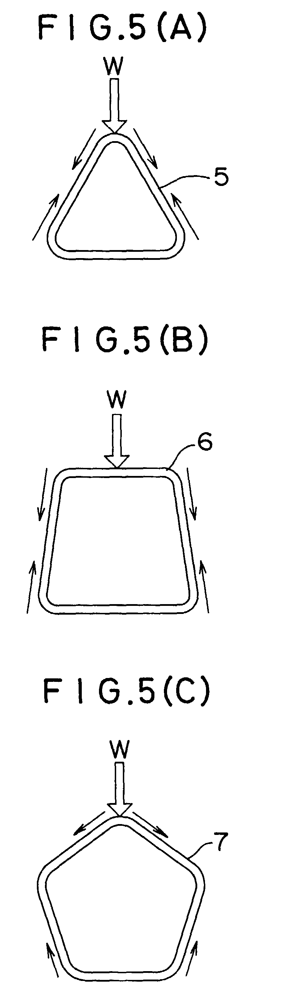

As shown in FIG. 5, as the shapes of the impact energy absorber, various shapes can be considered. The impact energy absorber 5 shown in FIG. 5A is in a triangular shape, and the impact energy absorber 6 shown in FIG. 5B is in a substantially quadrangular shape, and the impact energy absorber 7 shown in FIG. 5C is in a pentagonal shape. However, it may be formed into a hexagonal shape or other polygonal shapes.

The characteristics of the impact energy absorber 1 will now be described.

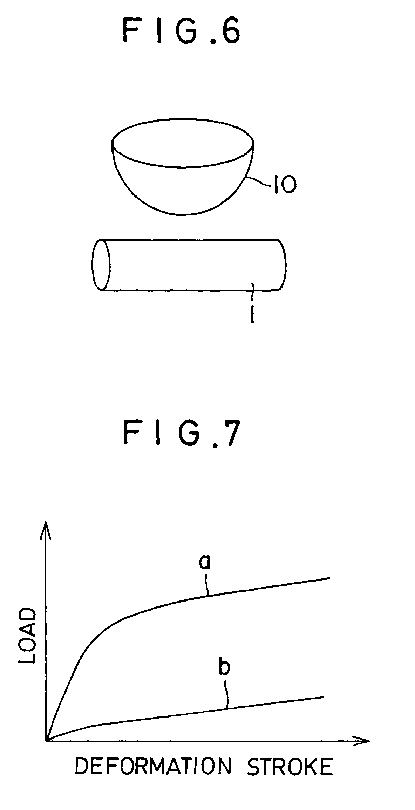

As shown in FIG. 6, the impact energy absorber 1 described above was compressed by the tip of a hemisphere 10 having a diameter of 165 mm by using a compression tester, and the inside length L in FIG. 2A was measured until the deformation amount becomes 0 mm. The compression speed was 100 mm/min.

The result is shown in FIG. 7, wherein the solid line a indicates the test result for the impact energy absorber 1, and the solid line b indicates the test result for the impact energy absorber in a comparative example which is the same circular pipe as the impact energy absorber 1 with the same material, length, outer shape and thickness, but does not have concaves and convexes on the periphery of the pipe.

As shown in FIG. 7, the energy absorber 1 provided with concaves and convexes 1a, 1b is deformed less under a high load at the initial stage than the one in the comparative example, absorbing energy from an external force at the initial stage of deformation. When a load over a certain value is applied, the deformation increases suddenly. On the other hand, the energy absorber in the comparative example exhibits a linear relationship such that deformation is proportional to load.

Next, how to use the impact energy absorber 1 will be described in a concrete example.

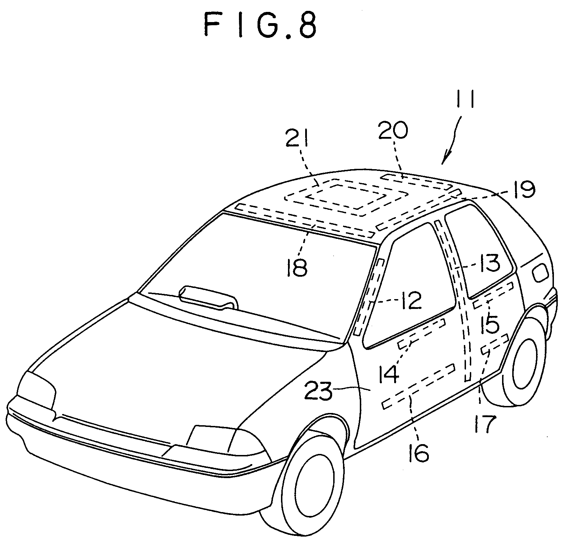

This energy absorber 1 absorbs the energy of an external force applied to the body of an automobile, or absorbs the kinetic energy of the occupants as a shock absorber to protect the occupants. The arrangement locations of the energy absorber 1 include, as shown in FIG. 8, a front pillar 12, center pillar 13, shoulder portions 14 and 15 and lower portions 16 and 17 of front and rear doors, front roof rail 18, side roof rail 19, and rear header rail 20 of an automobile 11. When a sliding roof is attached, the energy absorber can be arranged around the sliding roof 21.

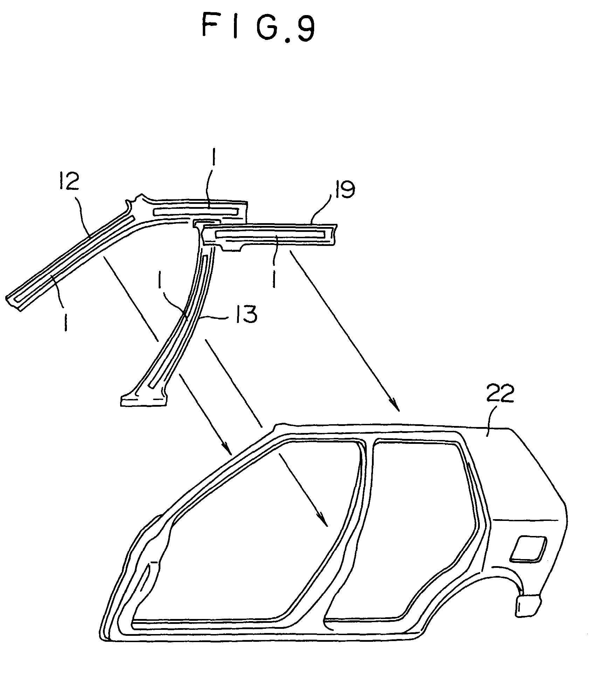

FIG. 9 shows a state in which the energy absorber 1 is attached to the front pillar rail 12, center pillar rail 13 and side roof rail 19, which are inside panels. The energy absorber 1 is flexible because of concaves and convexes 1a, 1b, and can be attached even if the arrangement location is somewhat curved. Thereafter, the energy absorber 1 is arranged at respective locations by fixing respective rails 12, 13 and 19 to the side body panel 22 which is the outer panel of the automobile 11 by welding or by an adhesive.

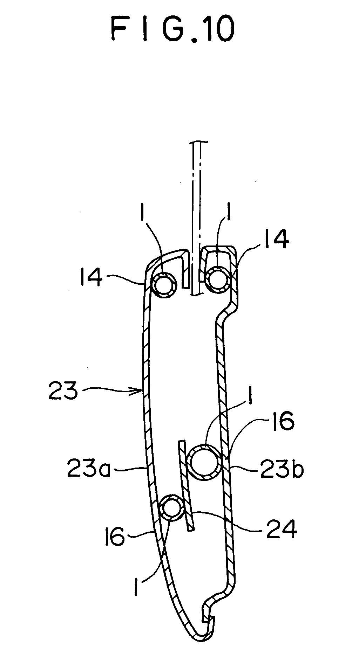

FIG. 10 is a cross sectional view of a front door 23. As described above, the energy absorber 1 is attached to a shoulder portion 14. The location where the energy absorber 1 is attached may be on the outer panel 23 side as shown in the figure. Furthermore, when the strength should be increased or when the burden of the weight need not be considered, the energy absorber 1 may be fixed to a reinforcement 24 as an inner panel. If the strength on the inner panel 23 side is increased, the deformation of the body can be suppressed by the inner panel 23. Furthermore, the energy absorber 1 may be attached to the inner panel side to absorb the energy when occupants are hit against the door to protect the occupants. In this case, the material of the energy absorber 1 is adjusted to be thin as a shock absorber.

The impact energy absorbers 3 and 4 in an elliptic shape shown in FIGS. 4A and 4B are effective when they are arranged in a space having a small thickness. Furthermore, when the panel face to be attached is a plane, the contact area with the attached panel face becomes wide, thereby the impact energy absorber fits in well with the panel face and can be attached thereto strongly by an adhesive or by welding.

The impact energy absorber 5 in a triangular shape shown in FIG. 5A is reinforced by providing concaves and convexes (not shown) on the surface. In addition, three sides of triangle function like truss, and even if load W is applied, the strength until the energy absorber is completely deformed plastically becomes high, and it becomes possible to lighten the weight of an automobile further by making the thickness of the impact energy absorber small. However, if the angle is acute, the energy absorber is easy to be cracked. Therefore, by making the angle round, crack can be prevented.

Regarding the impact energy absorber 6 having a cross section in a trapezoidal shape shown in FIG. 5B, the oblique sides of the trapezoidal shape can absorb large energy until they are deformed plastically under load. Regarding other polygons, they can be used for applications as the impact energy absorber, according to the characteristics due to their shapes.

As described above, the energy absorber in accordance with the embodiment of the present invention which has concaves and convexes on the peripheral face of the pipe can absorb large energy. Therefore, when an external force is applied to the body of an automobile 11, the energy absorber 1 undergoes plastic deformation to absorb the energy of the external force, as shown in FIG. 1B, so that it can alleviate the burden and impact applied to other portions of the automobile 11.

Moreover, the energy absorber undergoes plastic deformation so that it can absorb the kinetic energy of the occupants when the occupants are hit against the vehicle body to alleviate the injury.

Furthermore, the energy absorber 1 has versatility such that it can be attached to a somewhat curved location by been deformed accordingly, therefore its attaching workability is high. Its weight is light though its strength is high, so that it does not increase the weight of vehicle body so much.

Although one embodiment of the present invention has been described above, needless to say, the present invention is not limited to this embodiment. Various modifications may be made based on the technical concept of the present invention.

For example, according to the above-mentioned embodiment, the energy absorbers 1 are arranged at the locations shown in FIG. 7, but the arrangement locations of the energy absorber 1 are not limited to the aforementioned locations. For example, the energy absorbers 1 may be arranged on the inside of the bumper, as well as on a body shell such as a side shell, apron side panel or front panel of an engine room with similar effects. With respect to the attaching method of the energy absorber 1, it is bonded by an adhesive or by welding in the embodiment of the present invention, but it may be attached to the panel by installing clips on the absorber, or may be attached using a clip band.

As for the shapes of concaves and convexes 1a, 1b of the energy absorber 1, they are in a ripple form in the present invention, but rectangular concaves and convexes in a spiral-shape can get the similar effects. As for the veining of concaves and convexes, it need not be continuous, and thickness t, height of the peak of convexes 1b, depth of concaves 1a, and pitch p need not be the same.

The same thing can be said of polygonal impact energy absorbers.

As described above, the energy absorber can absorb the energy of an external force applied to the body without an appreciable increase in weight of a vehicle body, and can alleviate the shock of occupants and damage to other components caused by the external force.

Furthermore, the energy absorber can absorb the kinetic energy when occupants are hit against the body due to the external force applied to the body so that injury of occupants can be alleviated.

## Claims

1. An impact energy absorber which is a metallic pipe provided with concaves and convexes integrally formed on the front and back surfaces and disposed in a space provided between a body outer panel which forms the external face of an automobile and a body inner panel, with the peripheral face of said pipe being mounted with a mounting member facing said both panel surfaces to absorb the energy of an external force by being deformed plastically when an external force is applied to said pipe.

2. An impact energy absorber according to claim 1, wherein the cross section of said pipe is substantially circular, and concaves and convexes are in a spiral form extending in the axial direction of said pipe, or they are in a bellows form in which concaves and convexes are alternately arranged in the axial direction of said pipe.

3. An impact energy absorber according to claim 1, wherein the cross section of said pipe is substantially polygonal, and concaves and convexes are in a spiral form extending in the axial direction of said pipe, or they are in a bellows form in which concaves and convexes are alternately arranged in the axial direction of said pipe.

4. An impact energy absorber according to claim 3, wherein the angles of said polygonal pipe are rounded.
